# EUROPÄISCHE PATENTSCHRIFT

(11) **EP 4 063 419 B1**
(45) Veröffentlichungstag und Bekanntmachung des Hinweises auf die Patenterteilung: **19.04.2023**
(21) Anmeldenummer: 22157028.6
(22) Anmeldetag: 16.02.2022
(51) Int. Cl.: C08G 18/08, C08G 18/12, C08G 18/28, C08G 18/38, C08G 18/44, C08G 18/75, C09D 175/06

(54) **FLAMMHEMMENDE, NICHT-IONISCH STABILISIERTE, WÄSSRIGE PU-DISPERSION**
FLAME-RETARDANT NONIONIC STABILIZED AQUEOUS PU DISPERSION
DISPERSION PU AQUEUSE IGNIFUGE, STABILISÉE NON IONIQUEMENT

(30) Priorität: 22.03.2021 DE 102021107028
(43) Veröffentlichungstag der Anmeldung: 28.09.2022
(73) Patentinhaber: SYNTHOPOL CHEMIE Dr. rer. pol. Koch GmbH & CO. KG, 21614 Buxtehude (DE)
(72) Erfinder: SPOHNHOLZ, Rüdiger, 22523 Hamburg (DE); SIMON, Rolf, 21614 Buxtehude (DE)
(74) Vertreter: Müller Schupfner & Partner Patent- und Rechtsanwaltspartnerschaft mbB

(56) Entgegenhaltungen:
- DE-A1-102015 116 528
- US-A1- 2013 203 936

## Beschreibung

Die vorliegende Erfindung betrifft flammhemmende, nicht-ionisch stabilisierte, wässrige Polyurethan-Dispersionen (PU-Dispersionen) mit in die Polyurethan-Polymerstruktur eingebauten Organo-Phosphor-Verbindungen, Beschichtungen hergestellt mit derartigen PU-Dispersionen und deren Verwendung in flammgehemmten Beschichtungsmitteln, wie wässrigen 1K und 2K Lacken, sowohl lufttrocknend, forciert trocknend wie auch Einbrennlacken als Alleinbindemittel und auch in Kombination mit anderen wässrigen Bindemitteln wie z.B. Acrylatdispersionen, Alkydharzen oder Epoxydharzen.

### Stand der Technik

Um brand- und flammschutztechnische Anforderungen zu erfüllen, werden Werkstoffe wie Kunststoffe oder Beschichtungsmittel mit Flammschutzmitteln ausgerüstet. Die Flammschutzmittel dienen dazu, die Verbrennung zu hemmen oder ganz zu unterbinden. Die Verarbeitungs- und die sonstigen Gebrauchseigenschaften flammgeschützter Werkstoffe können von denen ohne Flammschutz zum Teil deutlich abweichen. Auch für Beschichtungen auf Basis wässriger Polyurethandispersionen besteht häufig der Wunsch, diese mit einem Flammschutz auszustatten.

Nach Chemie und Wirkungsweise unterscheidet man im Wesentlichen zwischen halogenierten, phosphorhaltigen und anorganischen Flammschutzmitteln. Halogenierte Flammschutzmittel wirken in der Gasphase, indem sie den Verbrennungsprozess chemisch unterbrechen. Anorganische Flammschutzmittel wie Aluminiumhydroxid oder Magnesiumhydroxid schließlich zersetzen sich im Brandfall, spalten dabei Wasser ab, verdünnen die Brandgase und kühlen die Brandstelle. Wegen der hohen Zugabemenge dieser Stoffe in die Beschichtungsmittel werden jedoch die Eigenschaften der Werkstoffe durch den Zusatz des anorganischen Flammschutzmittels häufig beeinträchtigt.

Phosphorhaltige Flammschutzmittel bauen auf der brennenden Oberfläche durch Verkohlen - manchmal verbunden mit Aufschäumen - eine Schutzschicht auf. Diese Schicht wirkt isolierend und dämmt den Sauerstoffzutritt zum Brandherd ein. Phosphorhaltige Flammschutzmittel wirken durch die Bildung einer Polyphosphorsäure-Schutzschicht.

Gleichzeitig bildet sich durch die Verkohlung Wasser, das kühlend wirkt. Die Mittel sind weitgehend umweltneutral und bezogen auf die eingesetzte Menge an Phosphor relativ wirksam. Typische als Additiv zumischbare Phosphor-Verbindungen sind Ammoniumpolyphosphat, Melaminpolyphosphat, roter Phosphor, Metallphosphinate, Phosphor- und Phosphonsäureester und Phosphazene. Nachteil all dieser Flammschutzmittel ist, dass diese anorganischen Verbindungen in der Regel unverträglich mit den wässrigen organischen Bindemitteln sind und somit nur pigmentierte Beschichtungsmittel mit niedrigem Glanzgrad möglich waren, nicht aber z.B. Klarlacke.

Flammschutzmittel, die in dispergierter (partikulärer) Form oder als gelöster Feststoff vorliegen, werden externe Flammschutzmittel genannt. Externe Flammschutzmittel und ggf. weitere Füllstoffe beeinflussen das Eigenschaftsprofil der Beschichtungsmittel in Hinsicht auf das äußere Erscheinungsbild und die Beständigkeit der Beschichtung häufig negativ. Aufgrund der sich häufig ergebenden Unverträglichkeit mit den externen Flammschutzmitteln sind Beschichtungsmittel nur mit niedrigem Glanzgrad und geringer Transparenz möglich.

Andererseits werden zunehmend Beschichtungen gefordert, die transparent und zusätzlich flammhemmend sind. Dies ist unter Verwendung bisher bekannter partikulärer und externer Flammschutzmittel in der Regel nicht möglich. Gerade bei Klarlacken für Möbel in öffentlichen Gebäuden, Hotels etc. werden hohe Anforderungen an das Brandverhalten gestellt. Eine Zugabe partikulärer Zusätze als Brandschutzadditive in wässrigen Zubereitungen führt zwar in vielen Fällen dazu, dass die Brandschutzbestimmungen erfüllt werden, erzeugt aber einen ungewünschten Schleier und das Holz und seine schützende Oberflächenbeschichtung verlieren an Brillanz. Die Zugabe der Flammschutzmittel kann darüber hinaus zu Qualitätsverlusten durch Migration nach längerer Lagerzeit der Zubereitung infolge der unterschiedlichen Dichten der Bestandteile der Formulierung führen.

Ebenso muss die mechanische und chemische Beständigkeit bei flammhemmenden Beschichtungen weitgehend erhalten bleiben. Dies wird von einem in das Polymer chemisch eingebauten Flammschutzmittel deutlich besser erzielt als von einem nachträglich in die Lackformulierung zugegebenen Additiv.

Verschiedentlich sind bereits Bindemittel auf Basis wässriger PU-Dispersionen vorgeschlagen worden, bei denen phosphorhaltige Moleküle in die Haupt- oder in die Seitenkette des PU-Polymers eingebaut wurden. Beispiele hierfür sind die EP 3150646 A1 und die EP 2623571 A1. Beschichtungsmittel auf Basis solcher Bindemittel können transparent sein. Die in diesen beschriebenen Polyurethandispersionen sind jedoch anionisch stabilisiert.

### Aufgabe der vorliegenden Erfindung

Es ist die Aufgabe der vorliegenden Erfindung, ein wässriges flammhemmendes Bindemittel auf Polyurethanbasis zur Verfügung zu stellen, das für wässrige Ein- und Zwei-Komponenten-Beschichtungsmittel auf Basis von wässrigen Polyurethan-Beschichtungen geeignet ist. Nach einer Ausführungsform der Erfindung sollen auch pigmentierte oder mit anderen Füllstoffen versehene Beschichtungsmittel mit üblichen Schichtdicken mit Flammschutz herstellbar sein, die neben der chemisch kovalent gebundenen Organophosphor-Gruppe im Polymer der PU-Dispersion als Option auch die Zugabe von externen Flammschutzmitteln zum Bindemittel oder der Lackformulierung erlauben. Weiterhin sollen durch den zweifachen Einsatz der Phosphor-Verbindungen, chemisch gebunden über kovalente Bindungen im Polymer (intern) als auch physikalisch eingerührt (extern), die Eigenschaften der Polyurethane, insbesondere die filmbildenden Eigenschaften möglichst wenig verändert werden. Insbesondere sollen transparente Beschichtungsmittel zugänglich werden, welche auf Holz die Maserung des Holzes hervorheben - dies wird häufig als Anfeuerung bezeichnet - und gleichzeitig flammhemmend ausgestattet sind.

### Zusammenfassung der Erfindung

Diese Aufgabe wird durch den Gegenstand der unabhängigen Patentansprüche gelöst. Vorteilhafte Ausgestaltungen sind Gegenstand der Unteransprüche oder nachfolgend beschrieben. Die vorliegende Erfindung betrifft wässrige nicht-ionisch stabilisierte mit einem internen Flammschutz ausgestattete Polyurethandispersionen, deren Herstellung und Anwendung.

Das Verfahren zur Herstellung einer wässrigen PU-Dispersion enthaltend ein PU-Polymer umfassend die Umsetzung von
- in beliebiger Reihenfolge oder alle zusammen von zumindest jeweils einem Alkohol aus der Gruppe enthaltend zumindest Alkohol A, Alkohol B, und Alkohol C, wobei die Gruppe fakultativ unter anderem weiterhin Alkohol D enthalten kann,
- mit zumindest einem Polyisocyanat aufweisend zumindest zwei Isocyanatgruppen,
mit einem NCO/OH -Verhältnis von größer 1,1 : 1 bis 2,5 : 1, in Bezug auf das Polyisocyanat einerseits und die Summe der Alkohole A, Alkohole B und Alkohole C andererseits,
zur Herstellung eines PU-Polymers,
- wobei der Alkohol A mindestens zwei Hydroxylgruppen und ein mittleres Molekulargewicht von 400 bis 5000 g/mol (Zahlenmittel), vorzugsweise 500 bis 2000 g/mol (Zahlenmittel), aufweist,
- wobei der Alkohol B mindestens zwei Hydroxylgruppen und in der Seitenkette eine Ethylenoxid-Struktur aufweist und ein mittleres Molgewicht von 500 bis 4000 g/mol (Zahlenmittel), insbesondere 800 bis 3000 g/mol (Zahlenmittel), aufweist,
- wobei der Alkohol C mindestens zwei Hydroxylgruppen und mindestens eine Phosphor-Gruppe kovalent gebunden enthält und die Phosphor-Gruppe ausgewählt ist aus
   a) zumindest einer Phosphonat-Gruppe der Struktur

      (O=)(-O-)(-O-)P-

      oder
   b) zumindest einer Phosphinat-Gruppe der Struktur

      (O=)(-O-)P< und
   c) Mischungen der obigen Phosphinat-Gruppe(n) a) und Phosphonat-Gruppe(n) b)
      und
- das PU-Polymer in Wasser dispergiert wird und ggf.
- vor oder nach der Dispergierung das PU-Polymer mit zumindest einem Kettenverlängerungsagenz umgesetzt wird. Ggf. können weitere fakultative Alkohole bei der Umsetzung zugegen sein, wobei
- bevorzugt als fakultativer Alkohol D ein Alkohol mit mindestens einer Hydroxylgruppe, bevorzugt einer, und mindestens einer Doppelbindung eingesetzt wird.

Es können auch Kombinationen verschiedener Alkohole C mit oben aufgeführten Gruppen a) und b) eingesetzt werden.

Die Kettenverlängerungsagenzien sind solche, die mindestens zwei der folgenden Gruppen aufweisen, zwei Hydroxy-Gruppen oder eine Hydroxy-Gruppe und eine Amin-Gruppe oder zwei Amin-Gruppen. Beispiele sind Diamine, Aminoalkohole und/oder Diole, wie Ethylendiamin, Diethanolamine, Ethanol-2,2-diamine oder Diethylentriamin, wobei die Kettenverlängerungsagenzien jeweils Molekulargewichte kleiner 400 g/mol, insbesondere kleiner 200 g/mol aufweisen.

Ein etwaig erhaltenes Präpolymer mit reaktiven Isocyanat-Gruppen (vorliegend auch als PU-Polymer bezeichnet, weil der Begriff PU-Polymer auch PU-Präpolymere umfasst) wird durch die Umsetzung mit dem Kettenverlängerer dabei in ein PU-Polymer überführt.

PU-Polymer bzw. PU steht vorliegend für ein Polyurethan -Polymer oder ein Polyurethan-Polyharnstoff-Polymer. Der Begriff "PU-Dispersion" steht für eine wässrige Dispersion eines PU-Polymers enthaltend zumindest Gruppen, wie sie zumindest aus der Reaktion einer Isocyanat-Gruppe mit Alkohol-Gruppen oder mit Alkohol- und Amin-Gruppen entstehen. Der Begriff PU-Polymer umfasst auch PU-Präpolymere, d.h. PU-Polymere aufweisend reaktive NCO-Gruppen.

Die Reihenfolge der Umsetzung mit den unterschiedlichen Alkoholen ist an sich beliebig, in der Regel werden alle Alkohole gleichzeitig vorgelegt, es ist aber beispielsweise auch möglich, zunächst Alkohol C vorzulegen, mit dem Polyisocyanat oder Polyisocyanat-Gemisch umzusetzen und danach die Alkohole A und B gemeinsam oder einzeln zuzugeben.

Als Alkohole D sind ein oder mehrere Polyole verwendbar, die über reaktive Doppelbindungen verfügen, so dass eine Pfropfung des späteren Polyurethans mit Acrylmonomeren als auch eine oxidative Trocknung oder UV-Härtung der fertigen Polyurethandispersionen möglich wird.

Das PU-Polymer der PU-Dispersion weist somit ein "ein polymerisiertes" organophosphormodifiziertes Diol oder Diolgemisch (Alkohol C) auf, das aus einer Einstufen- oder Zweistufenreaktion mit den üblicherweise im Bereich der Polyurethandispersionen eingesetzten Polyether-, Polyester- und Polycarbonatdiolen bzw. Kombinationen daraus über die Präpolymerbildung erhältlich ist.

Es wurde gefunden, dass phosphorhaltige Monomere mit mindestens zwei Hydroxyl-Gruppen und ggf. weiteren funktionellen Gruppen sich in die Polymerkette des Polyurethans einbauen lassen. Die Phosphorverbindung Alkohol C verliert dann ihren Additivcharakter, wie sie diesen nach dem Stand der Technik bisher beim bloßen Zumischen oder nachträglichen Additivieren als externes Flammschutzmittel hat.

Bei dem phosphorhaltigen Alkohol C oder dessen Gemisch kann die Phosphonat-Gruppe(n) a) und/oder die Phosphinat-Gruppe(n) b) in die Hauptkette oder in die Seitenkette des Polyurethans eingebaut werden, so dass das Phosphoratom Teil der Hauptkette oder Teil der Seitenkette wird. Wenn das Phosphoratom Teil der Seitenkette ist, ist es nach einer Ausgestaltung der Erfindung um mindestens ein Kohlenstoffatom von der Hauptkette abgerückt, vorzugsweise eine -CH₂- Gruppe.

PU-Dispersionen, die anionisch über Säuregruppen stabilisiert sind, eine Organophosphorverbindung des Typs Alkohol C im Polymer aufweisen, sind in der EP 3150646 A1 beschrieben. Mit diesen Dispersionen sind unter Erhalt der Transparenz der Beschichtungen flammhemmende Eigenschaften erreichbar, die der Brandschutzklasse gemäß DIN 4102 Teil1 B2 genügen. Will man mit diesen Dispersionen eine höhere Flammhemmung oder eine höhere Brandschutzklasse erzielen, müssen externe Flammschutzmittel in einer Konzentration zugegeben werden, die zu einer Eintrübung des getrockneten Lackfilmes und damit zum Verlust der Transparenz führen. Durch die neuartigen Polyurethandispersionen mit veränderter Polymerstruktur lassen sich eine erhöhte flammhemmende Wirkung unter Beibehalt der Trockentransparenz erzielen, weil die Zugabe externer Flammschutzmittel möglich wird, ohne die Eigenschaften des Beschichtungsmittels negativ zu beeinflussen.

Diese neuartigen PU-Dispersionen sind aufgrund ihres Stabilisierungsmechanismus auch frei von flüchtigen Aminen, insbesondere Triethylamin-frei. Grundsätzlich ist Triethylamin (TEA) aufgrund seiner Basizität und seines Charakters als tertiäres Amin ein besonders beliebtes Neutralisationsmittel in der Herstellung von anionisch stabilisierten Polyurethandispersionen.

Im Unterschied zur EP 3150646 A1 betrifft die vorliegende Erfindung keine anionisch stabilisierten PU-Dispersionen (jeweils als interne Gruppen), sondern intern nicht-ionisch stabilisierte Polyurethandispersionen. Hier ergibt sich die Dispergierfähigkeit der PU-Polymere in Wasser nicht über Carboxylate/Sulfonate bzw. Ammoniumgruppen wie bei anionisch bzw. kationisch stabilisierten Polyurethandispersionen, die alle als Gegenion ein flüchtiges Amin / Hydroxid der Alkaligruppe bzw. eine schwache Säure besitzen. Die Stabilisierung wird durch Alkohol B aufweisende Ethylenoxid-Einheiten in der Seitenkette erreicht.

Die erfindungsgemäßen nicht-ionisch stabilisierten PU-Dispersionen sind VOC ärmer als vergleichbare ionisch stabilisierte Dispersionen. Weitere Vorzüge gegenüber klassisch ionisch stabilisierten Polyurethandispersionen sind bessere Stabilität auch bei niedrigen pH-Werten, verbesserte Elektrolytstabilität und geringerer Geruch durch das Fehlen flüchtiger Amine bzw. protonierter Säuren.

Diese neuartigen Polyurethandispersionen können frei von N-Methyl-2-pyrrolidon (NMP) und N-Ethyl-2-pyrrolidon (NEP) sein und sowohl nach dem Präpolymerverfahren als auch vorzugsweise nach dem Acetonverfahren hergestellt werden. Nach dem Acetonverfahren werden die Präpolymere während der Herstellung mit einem Keton-Lösungsmittel wie Aceton oder Methylethylketon verdünnt, wobei das Keton-Lösungsmittel nach Herstellung der PU-Dispersion als Azeotrop herausdestilliert wird. Nach dem Präpolymerverfahren wird entweder kein Lösungsmittel zugesetzt oder das Lösungsmittel wird zugesetzt und verbleibt im PU-Präpolymer und schließlich in der PU-Dispersion.

Die erfindungsgemäßen PU-Dispersionen, die nicht-ionisch stabilisiert sind, können Phosphorgehalte (intern) von 0,5 Gew.% bis zu 10 Gew.% (bezogen auf den Feststoffgehalt des PU-Polymers), bestimmt per Elementar-Analyse, enthalten. Der Feststoffgehalt wird bestimmt nach DIN EN ISO 3251.

Mit diesen Dispersionen sind Brandschutzformulierungen in Anlehnung an DIN 4102 Teil1 B2 möglich, ohne dass Zusätze von externen flammenhemmenden Additiven notwendig sind.

Will man Beschichtungen formulieren, deren flammhemmende Wirkung über die Anforderungen DIN 4102 Teil1 B2 hinausgehen, so können zusätzlich externe Flammschutzmittel in Konzentrationen von 1 bis 40%, besonders 5% bis zu 25% zugesetzt werden, ohne dass die Transparenz wesentlich beeinträchtigt wird. Bei höherer Konzentration der externen Flammschutzadditive geht aber auch hier die Transparenz der Beschichtung verloren. Die erfindungsgemäße PU-Dispersion erlaubt weiter den Zusatz der Flammschutzmittel in den oben definierten Konzentrationen, ohne dass die Viskosität so stark ansteigt, dass es zur Koagulation der Dispersion kommt und somit die PU-Dispersion nicht mehr als Beschichtungsmittel eingesetzt werden kann.

Überraschend wurde gefunden, dass die o.a. beschriebenen organophosphormodifizierten und gleichzeitig nicht-ionisch stabilisierten Polyurethandispersionen eine gute Verträglichkeit zu den üblichen anorganischen Füllstoffen aufweisen. Somit wird eine deutlich erhöhte flammhemmende Wirkung bei Zusatz von externen Additiven in gewissen Konzentrationsverhältnissen unter Beibehalt der transparenten Filmbildung erzielt.

Diese neuartigen Polyurethandispersionen können als Alleinbindemittel aber auch in Kombination mit anionisch stabilisierten Acrylatdispersionen/Polyurethandispersionen und anderen nicht-ionisch stabilisierten Polyurethandispersionen verwendet werden.

Für Grundierungen und Basecoat-Formulierungen sind Einkomponentenlacke zu verwenden, für Einschichtlacke bzw. Decklackierungen sind Zweikomponentenlacke aufgrund der besseren chemischen Beständigkeit zu bevorzugen. Die PU-Dispersionen werden bevorzugt als Bindemittel in Klarlacken eingesetzt, insbesondere für Holz.

Der Trocknungs- bzw. Härtungsverlauf der Harze wird nur unwesentlich durch die eingebauten Phosphor-Verbindungen beeinflusst, so dass die eigentlichen Eigenschaften des Beschichtungsmittels kaum nachteilig verändert werden.

Derart modifizierbare nicht-ionische Polyurethane sind überraschenderweise gut als Dispersion herstellbar und lassen sich leicht mit anderen wässrigen Dispersionen, insbesondere Acrylat-Dispersionen oder anderen Polyurethan-Dispersionen mischen. Ebenfalls ist eine chemische Kombination von Polyurethan- und Acrylatkomponenten auf diesem Reaktionsweg unter Verwendung des fakultativen Alkohols D in sogenannten Hybriddispersionen durch Pfropfung möglich.

Diese Modifizierung der nicht-ionischen Stabilisierung durch Alkohol C verändert die Rheologie der Dispersion kaum und gestattet die zusätzliche Additivierung mit externen Flammschutzmitteln besser als bei herkömmlichen ionisch stabilisierten Dispersionen. Weiterhin lässt sich ein hoher Phosphorgehalt im Polyurethan einstellen, ohne die Polymereigenschaften wesentlich zu verändern, das Produkt ist lagerstabil, sedimentiert nicht und beeinflusst die Kinetik und Thermodynamik der Reaktionspartner der Polyurethansynthese unter den gewählten Reaktionsbedingungen nicht.

Die Erfindung hat ferner den Vorteil, dass bei der Herstellung des PU-Polymers über das Acetonverfahren keine toxikologisch bedenklichen, hochsiedenden Lösungsmittel wie zum Beispiel N-Ethylpyrrolidon, N-Butylpyrrolidon und N-Methylpyrrolidon oder andere geeignete Lösungsmittel wie Dipropylenglykolmonomethylether eingesetzt werden müssen.

Ein weiterer Vorteil der erfindungsgemäßen PU-Dispersionen ist der Verzicht auf flüchtige Neutralisationsmittel wie Ammoniak oder tertiäre Amine, so dass diese Dispersionen einen Beitrag zur Reduzierung der VOC-Gehalte der daraus hergestellten Lacke leisten. Weiterhin wird durch die Verwendung der erfindungsgemäßen Polyurethandispersionen auf diese Weise der Geruch minimiert.

### Detaillierte Beschreibung der Erfindung

Die erfindungsgemäßen Polyurethane sind erhältlich durch Umsetzung von Alkoholen A, B und C mit mindestens jeweils zwei Hydroxyl-Gruppen und Polyisocyanaten.

Die Polyolkomponenten, dies sind die obigen Alkohole A, Alkohole B, Alkohole C, und ggf. Alkohole D werden mit Polyisocyanaten oder deren Gemischen, nachfolgend gemeinsam Polyisocyanate genannt, zu Präpolymeren umgesetzt. In den Dispersionen kann aufgrund der eingebauten Alkohole B auf den Einsatz von externen Emulgatoren verzichtet werden.

Der Alkohol A ist üblicherweise frei von den Seitengruppen der weiteren Alkohole B bis D. Der Alkohol A ist im Mittel vorzugsweise 1,9 bis 4 wertig, insbesondere 1,9 bis 2,3 wertig. Vorzugsweise werden zwei- oder dreiwertige Alkohole oder deren Mischungen eingesetzt und weiter bevorzugt sind größer 90 mol% aller eingebauten Alkohole A zweiwertig.

Der Alkohol A kann ein Polyetherpolyol, Polyesterpolyol, Polycarbonatdiol, Polyacrylatpolyol, Polyhydroxylolefin, Polycaprolactondiol oder eine Mischung davon sein.

Der Alkohol A weist ein mittleres Molgewicht von 400 bis 5000 g/mol, vorzugsweise von 500 bis 3000 g/mol und insbesondere 500 bis 2000 g/mol (jeweils Zahlenmittel) auf.

Der Alkohol A kann ein Polyetherpolyol sein und durch Homo- oder Copolymerisation von Ethylenoxid, Propylenoxid, Butylenoxid, Tetrahydrofuran, Styroloxid oder Epichlorhydrin oder durch Anlagerung mindestens einer dieser Verbindungen, gegebenenfalls im Gemisch oder nacheinander, an Startkomponenten mit reaktionsfähigen Wasserstoffatomen erhältlich sein. Typische Startverbindungen sind kurzkettige Diole mit 2 bis 6 Kohlenstoffatomen.

Weiterhin sind Polyesterpolyole als Alkohol A geeignet. Das Polyesterpolyol ist durch Umsetzung von zweiwertigem Alkohol mit zweiwertiger aliphatischer, cycloaliphatischer, arylaliphatischer oder aromatischer Carbonsäure und/oder dem entsprechenden Carbonsäureanhydrid erhältlich, wobei der zweiwertige Alkohol vorzugsweise Ethylenglykol, Propan-1,2-diol, Propan-1,3-diol, Butan-1,4-diol, 1,6-Hexandiol, Neopentylglykol, Trimethylolpropandiol, 1,4-Cyclohexyldimethanol, 2-Methylpropan-1,3-diol, 2- Methylpentan-2,4-diol, Diethylenglykol, Triethylenglykol, Polyethylenglykol, Polypropylenglykol, Dipropylenglykol, Dibutylenglykol oder eine Mischung davon ist, und die Carbonsäure oder das Carbonsäureanhydrid vorzugsweise Phthalsäure, Phthalsäureanhydrid, Isophthalsäure, Tetra- oder Hexahydrophthalsäureanhydrid, Cyclohexyldicarbonsäure, Maleinsäure, Maleinsäureanhydrid, Fumarsäure, dimere Fettsäure, aliphatische, lineare Dicarbonsäure mit einer Kohlenstoffanzahl von 2 bis 20 oder eine Mischung davon ist.

Besonders geeignet sind Umsetzungsprodukte von zumindest Alkandiolen mit endständigen OH-Gruppen, wie z.B. 1,6-Hexandiol und 1,4-Butandiol, und zumindest aromatischen Dicarbonsäuren bzw. deren Anhydriden, wie z.B. Phthalsäure bzw. Phthalsäureanhydrid.

Nach einer weiteren Alternative ist der Alkohol A ein Polycaprolactondiol, vorzugsweise im Molekulargewichtsbereich von 400 bis 5000, insbesondere 500 bis 3000 g/mol, besonders bevorzugt von 500 bis 2000 g/mol (jeweils als Zahlenmittel), wobei das Polycaprolactondiol z.B. aus epsilon-Caprolacton, beta-Propiolacton, gamma-Butyrolacton und/oder Methyl- epsilon-caprolacton oder einer Mischung davon erhältlich ist.

Nach einer bevorzugten weiteren Alternative ist der Alkohol A ein Polycarbonatdiol, vorzugsweise im Molekulargewichtsbereich (Zahlenmittel) von 400 bis 5000 g/mol, insbesondere 500 bis 3000 g/mol und besonders bevorzugt von 500 bis 2000 g/mol (jeweils als Zahlenmittel). Die Polycarbonatdiole enthalten als Starter und Co-Monomer kurzkettige zwei- oder dreiwertige Alkohole mit 2 bis 24, insbesondere 3 bis 10, Kohlenstoffatomen, typischerweise 1,6-Hexandiol, Neopentylglykol, 1,4-Dimethanol-Cyclohexan oder deren Gemische. Ebenso geeignet sind Polyestercarbonatdiole. Die beschriebenen Polycarbonatdiole können dabei auch Kohlendioxid als Starter oder Co-Monomer beinhalten und somit einen Beitrag zur Reduzierung der Emissionen an CO₂ beitragen. Solche Polycarbonatdiole sind von den Herstellern Covestro bzw. Aramco Chemicals unter den Handelsnamen Cardyon^{®} bzw. Converge^{®} erhältlich.

Darüber hinaus ist es auch möglich, Mischungen der oben genannten Alkohole A einzusetzen.

Der Alkohol B ist eine Verbindung, die mindestens zwei Hydroxyl- und zumindest eine Polyalkylenoxid-Gruppe, insbesondere genau eine Polyalkylenoxid-Gruppe, in der Seitenkette aufweist. Die Polyalkylenoxid-Gruppe kann am Ende der Seitenkette alkyl-verkappt sein, insbesondere Methyl.

Der Alkohol B weist z.B. im Mittel 5 bis 70, bevorzugt im Mittel 7 bis 55 Ethylenoxideinheiten pro Molekül auf. Derartige Polyalkylenoxid-Polyole sind in an sich bekannter Weise durch Alkoxylierung geeigneter Startermoleküle zugänglich sind (vergleiche z.B. in Ullmanns Enzyklopädie der technischen Chemie, 4. Auflage, Band 19, Verlag Chemie, Weinheim S. 31-38).

Für die Alkoxylierungsreaktion wird Ethylenoxid eingesetzt, ggf. in Kombination mit anderen Alkylenoxiden wie Propylenoxid, die in beliebiger Reihenfolge oder auch im Gemisch bei der Alkoxylierungsreaktion eingesetzt werden können.

Die Molmasse der Alkohole B beträgt vorzugsweise 400 g/mol bis 6000 g/mol, bevorzugt 500 g/mol bis 4000 g/mol und besonders bevorzugt 500 g/mol bis 3000 g/mol (jeweils als Zahlenmittel) bei einer (mittleren) OH-Funktionalität von 1,9 und größer, z.B. 2 bis 3.5 oder 1,9 bis 2,1.

Solche Polyetherdiole sind von den Herstellern Evonik und Perstorp unter den Handelsnamen Tegomer^{®} und Ymer^{®} erhältlich. Kommerzielle Produkte sind z.B. Ymer^{®} N120, Ymer^{®} N90 und Tegomer^{®} D3403, diese sind durch folgende allgemeine Formel gekennzeichnet 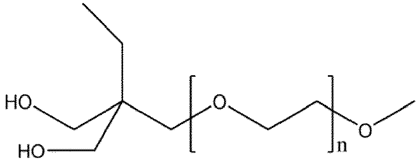 wobei die Molekulargewichte im Bereich von Mn von 900 bis 1400 g/mol schwanken. Die Ethylenoxid- bzw. Polyethylenoxid-Seitenkette ist Methylverkappt.

Der Alkohol C ist eine Organo-Phosphorverbindung, wobei der Alkohol C in der Hauptkette mindestens zwei Hydroxylgruppen aufweist, und mindestens ein Phosphoratom als Phosphonat- oder Phosphinat-Gruppe enthält.

Beispiele für geeignete Alkohole C für die Integration in die Polyurethankette und zwar in der Seitengruppe sind allein oder in Mischung folgende Organo-Phosphor-Verbindungen:
- Diethyl [bis(2-hydroxyethyl)amino] methylphosphonat (Verkaufsprodukt Fyrol^{®} 6 von ICL Industrial Products, Israel) 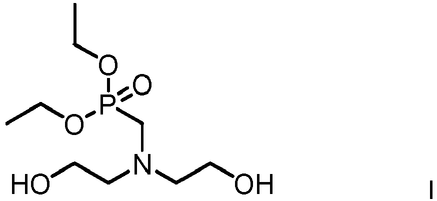
- 9,10-Dihydro-9-oxa-10-oxid-10-[2,3-di-(2-hydroxyethoxy)carbonylpropyl]-10-phosphaphenanthren-10-oxid (Verkaufsprodukt UKANOL^{®} FR 50/1 des Herstellers Schill+Seilacher, Deutschland) 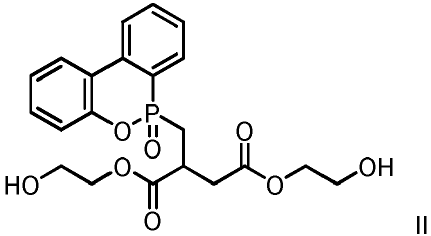
- 9,10-Dihydro-9-oxa-10-oxid-10-[1-propan-2,3-oxid]-10-phosphaphenanthren-10-oxid

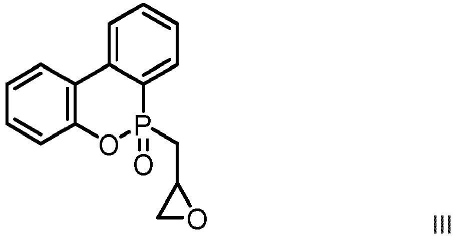

Die als Alkohol C eingesetzten Organo-Phosphor-Verbindungen sind (organo) Phosphonate (mit z.B. O=P(-O-)(-O-)(-C~), vorzugsweise O=P(-O-)(-O-)(-CH₂-),) oder (organo) Phosphinate (mit z.B. O=P(-O-)(-C~)(-C~), vorzugsweise O=P(-O-)(-CH₂-)(-C~)). Diese können in reiner Form oder ggf. auch in nicht NCO-reaktiven Lösungsmitteln gelöst, eingesetzt werden. Das Phosphoratom bzw. die Phosphonat- / Phosphinat- Gruppe ist nach einer Ausgestaltung um zumindest ein Kohlenstoffatom von der Polymerkette enthaltend die Urethan-Gruppen weggerückt. In den Formeln I bis III ist es jeweils genau eine -CH₂-Gruppe. Das Phosphoratom ist insbesondere kein Teil einer Phosphat-Gruppe bzw. Teil einer Gruppe, die P-OH Bindungen aufweist.

Bevorzugte Organophosphorverbindungen sind in der DE 102007056532 A1 beschrieben. Von diesen sind bevorzugt folgende Verbindungen, 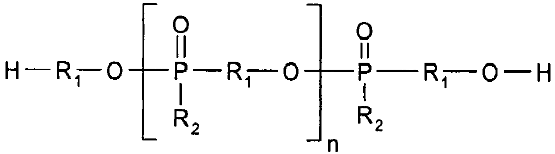 worin n eine mittlere Kettenlänge von 0 bis 20, insbesondere 2 bis 14, R₁ ein Rest der allgemeinen Formel (II), für jedes R₁ ggf. unterschiedlich 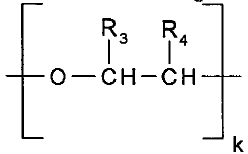 ist, worin keine mittlere Kettenlänge von 1-5 bedeutet, insbesondere 1 oder 2,
- R₂: ist gleich CH₃, CH₂CH₃, CH₂CH₂CH₃, CH₂(CH₃)₂, CH₂(CH₂)₂CH₃, CH₂CH(CH₃)₂, C(CH₃)₃, C₆H₅ oder CH₂-C₆H₅; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ oder O-CH₂-C₆H₅, bevorzugt CH₃, CH₂CH₃, CH₂CH₂CH₃, CH₂(CH₃)₂;
- R₃, R₄,: ist gleich oder verschieden sind und unabhängig voneinander H, CH₃, CH₂CH₃, CH₂CH₂CH₃, CH(CH₃)₂, CH₂(CH₂)₂CH₃, CH₂CH(CH₃)₂, C(CH₃)₃, C₆H₅ und/oder CH₂-C₆H₅ bedeuten, bevorzugt H oder H und CH₃;
k ist eine mittlere Kettenlänge von 1-3, insbesondere 1.

Lieferanten dieser Organophosphorverbindungen sind Schill & Seilacher, Thor und Clariant. Beispielhaft sei Aflammit^{®} PLF 140 des Herstellers Thor genannt.

Fakultativ kann ein Alkohol D zugesetzt sein. Dies ist z.B. ein hydroxyfunktionelles Acrylatmonomer wie zum Beispiel Hydroxyethylacrylat, Hydroxyethylmethacrylat, Hydroxypropylmethacrylat und/oder Hydroxymethylacrylat oder auch deren Gemische. Alternativ kann auch ein Acrylatpolyol mit einer Hydroxylzahl von 20 bis 250 und mindestens einer freien Doppelbindung eingesetzt werden. Bevorzugt ist der Einsatz von Alkoholen D mit nur einer Hydroxylgruppe. Dies begrenzt die Viskosität des sich bildenden Präpolymers und vermeidet mögliche Gelierungen. Die erfindungsgemäße Herstellung der acrylgepfropften Polyurethandispersionen kann aber auch bei Verzicht auf Alkohol D lediglich durch radikalische Spaltung einer Kohlenstoff-Wasserstoffbindung erfolgen.

Die Alkohole A und Alkohole B werden vorzugsweise in einem Gewichtsverhältnis von 5 : 1 bis 1 : 5, vorzugsweise 3:1 bis 1.3, eingesetzt, Alkohol A und Alkohol C in einem Gewichtsverhältnis von 10 : 1 bis 1:1, vorzugsweise 5:1 bis 1:1 und Alkohol B und der Alkohol C in einem Gewichtsverhältnis von 10 : 1 bis 3 : 1, vorzugsweise 5 : 1 bis 3 : 1.

Alkohol D wird in der Regel nur in geringeren Mengen als jeder der Alkohole A, B, C eingesetzt und hiervon (auch) unabhängig insbesondere maximal zu 5 Gew.% bezogen auf die Gesamtmenge des Polyurethans.

Die eingesetzten Polyisocyanate sind, gleich oder verschieden, insbesondere Diisocyanate, wie z.B.
- Diisocyanate eines aromatischen Kohlenwasserstoffs mit 6 bis 15 Kohlenstoffatomen,
- Diisocyanate eines aliphatischen Kohlenwasserstoffs mit 4 bis 15 Kohlenstoffatomen, und/oder
- Diisocyanate eines cycloaliphatischen Kohlenwasserstoffs mit 6 bis 15 Kohlenstoffatomen.

Als Polyisocyanate sind beispielsweise geeignet Tetramethylxylylendiisocyanat, 1,6-Hexamethylendiisocyanat, Isophorondiisocyanat, 1,3-Xylylendiisocyanat, 2,2,4-Trimethyl-1,6-hexandiisocyanat, Toluoldiisocyanat, Dicyclohexylmethan-4,4'-diisocyanat und 4,4'-Diphenylmethandiisocyanat oder deren Mischungen.

Vorzugsweise werden als Polyisocyanate Diisocyanate eines cycloaliphatischen Kohlenwasserstoffs mit 6 bis 15 Kohlenstoffatomen eingesetzt.

Als Kettenverlängerungsreagenzien kommen Diamine, wie Ethylendiamin, Diethylentriamin und höhere Homologe bis zu maximal 12 Kohlenstoffatomen, Diole, wie Ethylenglykol, Propylenglykol, Butandiol und höhere Homologe sowie Aminoalkohole wie Ethanolamin, Diethanolamin und höhere Homologe bis zu maximal 8 Kohlenstoffatomen und Diole wie Diethanolamine, Ethanol-2,2-diamine oder Di-ethylentriamin in Betracht. Möglich ist auch eine zweiwertige Stickstoffverbindung wie Hydrazin. Bevorzugt ist der Einsatz von Diaminen. Die Kettenverlängerungsagenzien haben jeweils Molekulargewichte von kleiner 400 g/mol, insbesondere kleiner 200 g/mol (Zahlenmittel).

Die Umsetzung der Alkohole A, B und C und ggf. D mit den Polyisocyanaten zu isocyanat-terminierten Präpolymeren mit einem NCO / OH -Verhältnis von größer 1,1 : 1 bis 2,5 : 1 erfolgt katalysatorfrei oder in Gegenwart eines Katalysators, wobei zinn-, titan-, wolfram- oder bismuthhaltige Katalysatoren bzw. deren Mischungen bevorzugt sind. Genannt seien exemplarisch Dibutylzinndilaurat, Dibutylzinnsäure und/oder Dibutylzinnoxid.

Bei der Herstellung des Präpolymers durch die Polyadditionsreaktion mit einem oder mehreren Polyisocyanaten können geringe Mengen an niedrigsiedenden Lösungsmitteln wie zum Beispiel Aceton oder Methylethylketon eingesetzt werden (Aceton-Verfahren). Unter niedrigsiedenden Lösungsmitteln sind erfindungsgemäß solche gemeint, die bei Normaldruck (1013 mbar) einen Siedepunkt von weniger als 100 °C aufweisen. Im Unterschied hierzu werden vorliegend Lösungsmittel als hochsiedend bezeichnet, wenn sie bei Normaldruck einen Siedepunkt von größer 100 °C aufweisen (Präpolymer-Verfahren).

Die niedrigsiedenden Lösungsmittel sind, falls im erfindungsgemäßen Verfahren eingesetzt, gegenüber den hochsiedenden ökonomisch vorteilhaft, weil sie nach der Herstellung der wässrigen Polyurethandispersion abdestilliert werden können und somit in manchen Fällen wiederverwendet werden können. Auch wenn bei der Herstellung des Präpolymers Lösungsmittel eingesetzt wird, ermöglicht somit das Verfahren die Herstellung von lösungsmittelarmen oder sogar nahezu lösungsmittelfreien Polyurethandispersionen. Solche Dispersionen sind ökologisch vorteilhaft, da sie bei der Weiterverarbeitung zu Beschichtungen keine oder nur sehr geringe Mengen an Lösungsmittel freisetzen, die eine umweltschädliche Wirkung entfalten könnten.

Die Zusammensetzungen enthaltend das PU-Polymer können nach einer Ausführungsform weiterhin 10 bis 70 Gew.-% Lösungsmittel (bezogen auf die Gesamtmenge der Zusammensetzung) während des Herstellprozesses enthalten. Das Lösungsmittel wird vorzugsweise nach dem Dispergieren der Zusammensetzung bzw. des PU-Polymers in Wasser entfernt.

Als Lösungsmittel seien genannt Methoxyhexanon, Methylethylketon, Methylisobutylketon, Aceton oder eine Mischung davon, vorzugsweise Methylethylketon und/oder Aceton, insbesondere Methylethylketon.

Das Dispergieren des Präpolymers/PU-Polymers aufweisend weiterhin ggf. Lösungsmittel in Wasser zum Erhalt der PU-Dispersion wird insbesondere bei 5 bis 40 °C durchgeführt, wobei das Präpolymer in Wasser dispergiert wird oder Wasser zum Präpolymer hinzugegeben wird, wobei (jeweils) auf den Zusatz von Emulgatoren verzichtet werden kann.

Nach Dispergieren des Präpolymers in Wasser erfolgt nach einer Ausführungsform (i) die Umsetzung der noch vorhandenen NCO-Gruppen des Präpolymers mit oben bezeichneten Kettenverlängerungsreagenzien. Diese sollen zumindest zwei Präpolymer-Ketten verknüpfen.

Nach einer anderen Ausführungsform (ii) wird das Präpolymer vor dem Dispergieren in Wasser mit einem - bezogen auf die verbleibenden NCO-Gruppen im Präpolymer - Überschuss einer OH-haltigen Komponente, die über eine weitere NCO-reaktive Gruppe wie eine Hydroxyl-Gruppe verfügt, umgesetzt und dann dispergiert.

In der Regel werden hierzu Ethanolamine oder ihre höherwertigen Homologen verwendet. Auf diese Weise wird auf eine Kettenverlängerung im Sinne der Verknüpfung von zumindest zwei Präpolymer-Ketten verzichtet und es werden OH-terminierte Polyurethane erhalten, die für eine spätere Umsetzung mit einem Vernetzer zur Verfügung stehen. Geeignete Vernetzer sind beispielsweise Polyisocyanate, Melamin-Harze, Polycarbodiimide und Polyaziridine.

Nach einer anderen Ausführungsform (iii) wird während der Herstellung des Präpolymers zusätzlich mit Alkohol D vorzugsweise in Anwesenheit von Acrylmonomeren wie z.B. Methylmethacrylat, Styrol, Butylacrylat, Butylmethacrylat, 2-Ethylhydroxylacrylat, Isobornylmethacrylat, Isobornylacrylat oder deren Gemische umgesetzt. Die Acrylmonomere dienen hierbei als viskositätsreduzierendes Medium, gleich einem Lösungsmittel. Auf die Anwesenheit der weiter oben genannten Lösungsmittel kann in dieser Ausführungsform somit verzichtet werden, so dass lösungsmittelfreie Dispersionen erhalten werden. Die Dispergierung und Kettenverlängerung erfolgt wie für die Ausführungsformen (i) oder (ii). Dabei kann entweder das Präpolymer bereits nach Ende der Herstellung in der organischen Phase vollständig kettenverlängert werden oder (bevorzugt) als NCO-terminiertes Präpolymer in Wasser dispergiert und dann kettenverlängert werden, z.B. mit Diaminen, zum Erhalt eines dispergierten und vollständig abreagierten Polyurethans. Als letzter Reaktionsschritt erfolgt eine radikalische Polymerisation der zugefügten Monomere in Gegenwart des Polyurethans. Durch die Doppelbindung des Alkohols D werden die Acrylatmonomere somit in das Polyurethangerüst eingebaut. Das Verhältnis Polyurethan zu Polyacrylat kann dabei variieren von 20:1 bis 1:1, bevorzugt von 10:1 bis 3:1.

Die erfindungsgemäßen wässrigen PU-Dispersionen weisen z.B. mittlere Teilchendurchmesser von 10 bis 1000 nm, vorzugsweise 50 bis 800 nm auf. Die Feststoffgehalte der Polyurethandispersionen weisen insbesondere einen Feststoffgehalt von 25 bis 55 Gew.%, vorzugsweise von 32 bis 40 Gew.-% auf, bestimmt nach DIN EN ISO 3251. Die PU-Dispersionen können weiter durch eine Viskosität bei 20 °C von 10 bis 800 mPas, vorzugsweise 20 bis 700 mPas und insbesondere bevorzugt 30 bis 600 mPas, nach DIN ISO 2884-1 und unabhängig hiervon durch einen pH-Wert (ohne Verdünnung gemessen) bei 20 °C von 6,5 bis 9,5, vorzugsweise 7,0 bis 9,0 nach DIN ISO 976, gekennzeichnet sein.

Der Polyurethandispersion können weiterhin Polyacrylate zugemischt sein, vorzugsweise erhältlich durch Zumischen einer wässrigen Polyacrylat-Dispersion (auch ohne dass die Alkohole D in das Präpolymer eingebaut sind) oder durch nachträgliche Pfropfung (wenn die Alkohole D eingebaut sind oder auch nicht) von geeigneten Acryl-Monomeren zum Erhalt einer bei 25°C bis 40°C lagerstabilen Polymerdispersion wie oben beschrieben.

Durch geeignete Rezeptierung nach dem Stand der Technik werden aus den erfindungsgemäßen Polyurethandispersionen Beschichtungsmittel, insbesondere Lacke, hergestellt. Mögliche Substrate für die erfindungsgemäßen Beschichtungsmittel sind Holz, Holzwerkstoffe, mineralische Baustoffe, Metall, Textil, Leder, Kunststoff und Papier. Dies wird im Folgenden erläutert. Die wässrigen Polyurethandispersionen eignen sich zur Herstellung von Klarlacken und pigmentierten Lacken ohne Verlust der Trockentransparenz. Der Lack kann zur Verfilmung der Polyurethandispersion Koaleszenzmittel enthalten, wie Butylglykol oder Glykolether.

Der Lack enthält nach einer Ausführungsform externe Flammschutzmittel, z.B. 5 bis 40 Gew.%, insbesondere 15 bis 25 Gew.%. Diese können neben Ammoniumpolyphosphat, weiterhin Kohlenhydrate, Pentaerithrit bzw. Dipentaerithrit und/oder Melamincyanurat oder Melaminphosphat sein. Der Phosphor dient zur direkten Brandbekämpfung, die stickstoffhaltigen Substanzen dienen als Schaumbildner und obige Polyole als Kohlenstoffspender sind für das Verfestigen des Schaumes zuständig. Insbesondere wird das Ammoniumpolyphosphat zu 1 bis 40 Gew.% im Lack eingesetzt.

Weiterhin kann das Beschichtungsmittel Additive wie Entschäumer, Verdicker, Mattierungsmittel und/oder Netzmittel neben den externen Flammschutzmitteln enthalten.

Die Beschichtungsmittel weisen bereits als luftgetrocknete 1-Komponenten-Filme (90 µm Rakelaufzug auf Glas, 24 h im Klimaraum bei 23°C und 50-60 % Luftfeuchte getrocknet) Pendeldämpfungen (Oberflächenhärte gemäß König nach DIN 53157 bestimmt mit einem Pendeldämpfungsgerät der Firma Byk) von größer 20 s, insbesondere größer 50 s, auf, insbesondere wenn es sich um einen Lack für Holz, Holzwerkstoffe, mineralische Baustoffe, Textilien, Metall oder Kunststoff handelt.

Die Erfindung betrifft ferner die Verwendung einer solchen Polyurethandispersion in wässrigen Beschichtungsmitteln, insbesondere in wässrigen Zwei-Komponenten-Beschichtungsmitteln oder wässrigen 1-Komponenten-Beschichtungsmitteln, wie zum Beispiel wässrigen Einbrennlacken.

Typische Zwei-Komponenten (2K)-Beschichtungsmittel, z.B. lufttrocknend oder forciert trocknend, enthalten neben den erfindungsgemäßen Polyurethandispersionen typischerweise wasseremulgierbare Polyisocyanate auf Basis von HDI (1,6-Hexamethylendiisocyanat) und/oder IPDI (Isophorondiisocyanat). Daneben können noch typische Verlaufs- und Netzmittel eingesetzt werden.

Typische Ein-Komponenten (1K)-Beschichtungsmittel enthalten neben den erfindungsgemäßen Polyurethandispersionen wasseremulgierbare Melaminharze oder wasseremulgierbare blockierte Polyisocyanate auf Basis von HDI und/oder IPDI, wie zum Beispiel für wässrige Einbrennlacke und -beschichtungen. Typische Gruppen zum Erhalt blockierter Polyisocyanate sind epsilon-Caprolactam, Malonester und Oxime wie Pentanonoxim oder Butanonoxim. Die Ein-Komponenten-Beschichtungsmittel werden als Einbrennlacke eingesetzt bei Temperaturen oberhalb von 120°C.

### Versuchsbeispiele

### Bindemittel I (erfindungsgemäß)

In einem Einliter-Dreihalskolben, ausgestattet mit KWG-Rührwerk, Tropftrichter, Stickstoffeinleitungsrohr und Rückflußkühler, wurden 110 g eines Polycarbonatdiols des Molgewichtes MW=1000 (basierend auf 1,6-Hexandiol), 73 g Aflamit PLF 140 und 360 g Ymer N 90 vorgelegt, auf 60°C erwärmt und im Vakuum entwässert. Bei dieser Reaktionstemperatur wurden 177,6 g Isophorondiisocyanat über 20 min unter Rühren und Stickstoffeinleitung zugetropft und nach Ende der Zugabe die Reaktionstemperatur auf 70°C erhöht. Die Reaktionsmischung wurde solange gerührt, bis der NCO-Gehalt (bestimmt per Titration) 4,5% betrug. Dann wurde die Reaktionsmischung auf 50°C abgekühlt und dabei 300 g Aceton zugegeben und gut eingerührt. Danach wurde die Präpolymerlösung in 1000 g Wasser unter Kühlung dispergiert und sofort danach 21,3 g Ethylendiamin in 70 g Wasser dazugegeben.

Nach weiteren 60 min Rühren bei 25°C war der verbliebene NCO-Gehalt auf unter 0,1% abgefallen. Die entstehende Dispersion wurde bei ca. 60°C unter Vakuum von 200-400 mbar solange destilliert, bis der verbleibende Acetongehalt (per Gaschromatographie bestimmt) unter 0,5% gefallen war. Die fertige Dispersion wurde abgekühlt und über 50 µm filtriert.

Die Kenndaten lauteten:
Nichtflüchtiger Anteil (1g/1h/125°C Umluftofen/ohne LSM): 38,2 Gew.% (DIN ISO-3251)
pH-Wert (unverdünnt gemessen mit Kapillarelektrode): 8,2 (DIN ISO 976) bei 23°C Viskosität (Rotation mit Haake VT 550 bei 20°C/D=444,6) 1/s : 30 mPas (DIN ISO-2884-1)

### Bindemittel II (Vergleichsbeispiel)

In einem Einliter-Dreihalskolben, ausgestattet mit KWG-Rührwerk, Tropftrichter, Stickstoffeinleitungsrohr und Rückflußkühler, wurden 111,3 g eines Polycarbonatdiols des Molgewichtes MW=1000 (basierend auf 1,6-Hexandiol) und 360 g Ymer N 90 vorgelegt, auf 60°C erwärmt und im Vakuum entwässert. Bei dieser Reaktionstemperatur wurden 177,6 g Isophorondiisocyanat über 20 min unter Rühren und Stickstoffeinleitung zugetropft und nach Ende der Zugabe die Reaktionstemperatur auf 70°C erhöht. Die Reaktionsmischung wurde solange gerührt, bis der NCO-Gehalt (bestimmt per Titration) 5,1% betrug. Dann wurde die Reaktionsmischung auf 50°C abgekühlt und dabei 300 g Aceton zugegeben und gut eingerührt. Danach wurde die Präpolymerlösung in 1000 g Wasser unter Kühlung dispergiert und sofort danach 21,3 g Ethylendiamin in 70 g Wasser dazugegeben. Nach weiteren 60 min Rühren bei 25°C war der verbliebene NCO-Gehalt auf unter 0,1% abgefallen. Die entstehende Dispersion wurde bei 55 - 65°C unter Vakuum von 200 - 400 mbar solange destilliert, bis der verbleibende Acetongehalt (per Gaschromatographie bestimmt) unter 0,5% gefallen war. Die fertige Dispersion wurde abgekühlt und über 50 µm filtriert.

Die Kenndaten lauteten:
Nichtflüchtiger Anteil (1g/1h/125°C Umluftofen/ohne LSM): 37,5 Gew.% (DIN ISO 325)
pH-Wert (unverdünnt gemessen mit Kapillarelektrode): 9,0 (DIN ISO 976) bei 23°C Viskosität (Rotation mit Haake VT 550 bei 20°C/D=444,6) 1/s : 320 mPas (gemessen nach DIN ISO 2884-1)

### Herstellung von Lackrezepturen

### Eingesetzt wurden folgende Rohstoffe:

| | |
|---|---|
| Disperbyk 181 + Byk 154: | Pigmentnetzmittel auf Basis Ammoniumpolyacrylat (Byk) |
| AMP 90 | Amino-methyl-propanol (90%+10% Wasser) zum Neutralisieren (Angus) |
| Addforce FR APP 1201 | Ammonium Poly-Phosphat (Phase II) (WTH, Stade) |
| Exolit AP 435 | Flammschutz-Additiv auf Basis von Ammonium PolyPhosphat (Phase II) (Clariant) |
| Foamex 800 (1:1 H₂O) | Polyethersiloxan Entschäumer (Evonik) |
| FoamStar SI 2292 | Polyethersiloxan Entschäumer (BASF) |
| Rheolate 278 | nichtionischer assoziativ wirkender Polyurethan-Verdicker (Elementis) |
| Bayhydur XP 2655 | Hydrophiles-Polyisocyanat, HDI-Trimer (Covestro) |

Die Rohstoffe wurden gemäß Position 1 bis 8 unter Rühren in der angegebenen Reihenfolge und Menge zugegeben. Danach wurde 15 Minuten mit der Zahnscheibe dispergiert (für D, E und F wurde 20 Minuten mit Glasperlen auf Stufe 4 dispergiert, Mahlgut / Perlen 1:1) und sodann wurden die Bindemittel I, II und III mit der Zahnscheibe auf niedriger Dispergierstufe zugegeben.

**Tabelle 1:**

| | (jeweils Gew.%) | **A** | **B** | **C** | **D** | **E** | **F** |
|---|---|---|---|---|---|---|---|
| 1 | Demin. Wasser: | 32,2 | 32,2 | 32,2 | 22,2 | 22,2 | 22,2 |
| 2 | Disperbyk 181 | 0,3 | 0,3 | 0,3 | 0,3 | 0,3 | 0,3 |
| 3 | Byk 154 | 0,5 | 0,5 | 0,5 | 0,5 | 0,5 | 0,5 |
| 4 | AMP 90 | 0,2 | 0,2 | 0,2 | 0,2 | 0,2 | 0,2 |
| 5 | Addforce FR APP 1201 | - | - | - | 10,0 | 10,0 | 10,0 |
| 6 | Foamex 800 (1:1 H₂O) | 0,3 | 0,3 | 0,3 | 0,3 | 0,3 | 0,3 |
| 7 | FoamStar^{®} SI 2292 | 0,5 | 0,5 | 0,5 | 0,5 | 0,5 | 0,5 |
| 8 | Rheolate 278 | 1,0 | 1,0 | 1,0 | 1,0 | 1,0 | 1,0 |
| | *15 min. dispergieren* | 35,0 | 35,0 | 35,0 | 35,0 | 35,0 | 35,0 |
| 9 | Bindemittel I (FK 38,2) | 65,0 | | | 65,0 | | |
| 10 | Bindemittel II (FK 37,5) | | 65,0 | | | 65,0 | |
| 11 | Bindemittel III aus EP 3150646 | | | 65,0 | | | 65,0 |
| | Beispiel A (FK 34,7) | | | | | | |
| | *15 min. mit Zahnscheibe dispergieren* | 100,0 | 100,0 | 100,0 | 100,0 | 100,0 | 100,0 |
| | FK = Festkörper in Gew.% | | | | | | |

Es wurden der pH-Wert und die Viskosität (als Auslaufzeiten) der Lackrezepturen bestimmt. Weiterhin wurden 10 Teile Vernetzer zugegeben (Bayhydur XP 2655 mit MPA auf 80% Festkörper verdünnt).

**Tabelle 2:**

| | **A** | **B** | **C** | **D** | **E** | **F** |
|---|---|---|---|---|---|---|
| Bindemittel | I | II | III | I | II | III |
| Interner Flammschutz | X | - | X | X | - | X |
| Externer Flammschutz | - | - | - | X | X | X |

| | **Erfindu ng** | **Vergleich** | **Vergleich** | **Erfindung** | **Vergleich** | **Vergleich** |
|---|---|---|---|---|---|---|
| pH-Wert (23°C) | 8,5 | 9,5 | 7,0 | 8,5 | 8,2 | 6,8 |
| Viskosität nach DIN EN ISO 2431, 4 mm Auslaufzeit bei 23°C [s] | 13 | 15 | 20 | 21 | 57 | 57 |
| Bayhydur XP 2655 80%ig (Vernetzer mit MPA verdünnt) | 10,0 | 10,0 | 10,0 | 10,0 | 10,0 | 10,0 |
| Viskosität nach DIN EN ISO 2431, 4 mm Auslaufzeit bei 23°C [s] | 15 | 18 | 25 | 24 | 78 | 120 |

Jetzt wurden die Viskositätsunterschiede noch deutlicher. Die Viskositäten der Lacke auf Basis des Bindemittels I veränderten sich kaum, die auf Basis der Bindemittel II und III wurden deutlich dicker.

Es wurden niedrigviskose Lacke A, B und C erhalten. Die Lacke E und F waren hochviskos, Lack D hatte die gewünschte Verarbeitungsviskosität.

### Optische Prüfungen

Applikation: 90 µm Aufzug auf Glas
Trocknung: 7d Raumtemperatur

**Tabelle 3:**

| **Lack** | **A** | **B** | **C** | **D** | **E** | **F** |
|---|---|---|---|---|---|---|
| Optik | klar | klar | klar | klar | leicht trüb | trüb / matt |
| Transparenz | gut | gut | gut | gut | mittel | schlecht |

Die Optik und Transparenz der Lacke ohne externem Flammschutzmittel waren bei allen Bindemitteln gut, es entstanden nach Trocknung klare, transparente Filme. Bei den Lacken mit externem Flammschutzmittel wurde nur der Lack A klar und transparent, die Lacke B und C dagegen wurden trüb, matt und hatten eine schlechte Transparenz.

### Flammschutz und Anfeuerung

Applikation: 400 µm Aufzug auf Eiche
Trocknung: 7d Raumtemperatur

Der Brandtest wurde wie folgt durchgeführt. Der zu prüfende Lack wurde mit einem Lackaufziehrakel mit 400 µm Spaltbreite auf ein 5 mm dickes mit Eiche furniertes Brett aufgezogen. Die Furnierdicke betrug ca. 0,5 mm.

Nach 7 Tage Trocknung bei Raumtemperatur im Klimaraum ( 23°C +/- 1°C und 50-60% rel. Feuchte) wurde das beschichtete Brett senkrecht fixiert und die mittelgroße Flamme eines Bunsenbrenners (ca. 5 cm lang, mit ca. 2 cm blauem Kern) waagerecht an die Beschichtung geführt, bis die Spitze des blauen Kerns der Flamme gerade eben die Beschichtung berührte. Nach 15 Sekunden wurde die Flamme entfernt und das Brett begutachtet. Es ergab sich, dass die erfindungsgemäße Beschichtung, Lack A, ohne externem Flammschutzmittel ankohlte und kurz weiterbrannte und nach kleiner 2 Sekunden von selbst erlosch. Mit externem Flammschutzmittel, Lack D, kohlte die beflammte Stelle an, brannte aber nicht. Der Vergleichslack auf Basis PUD-Beispiel II, ohne internem und ohne externem Flammschutz brannte weiter und musste gelöscht werden. Der Vergleichslack E ohne internem und mit externem Flammschutzmittel brannte kurz (< 2 Sekunden) weiter und erlosch. Lack C brannte kurz und erlosch in kleiner 2 Sekunden. Lack F mit externem Flammschutzmittel brannte nicht.

Dabei war die "Anfeuerung" des Eichen-Brettes bei dem Lack D mit externem Flammschutzmittel und nichtionisch stabilisierten PU-Dispersion als Bindemittel deutlich besser als die der anionisch stabilisierten PU-Dispersionen in Spalte E und F. Unter Anfeuerung versteht man vorliegend die optische Verbesserung einer Holzmaserung durch eine Lackierung.

**Tabelle 4:**

| | **A** | **B** | **C** | **D** | **E** | **F** |
|---|---|---|---|---|---|---|
| Flammschutz-Index | 1 | 4 | 1 | 0 | 1 | 0 |
| Anfeuerung Skala von 0 = sehr | 0 | 0 | 0 | 1 | 3 | 5 |
| gut bis 5 = schlecht | | | | | | |

Das Brandverhalten wurde anhand folgender Skala bewertet:

**Tabelle 5:**

| Flammschutz-Index: | | | | |
|---|---|---|---|---|
| 0 | nein, brennt nicht | | 3 | erlischt < 10 Sekunden |
| 1 | erlischt < 2 Sekunden | | 4 | ja, brennt weiter, muss gelöscht werden |
| 2 | erlischt < 5 Sekunden | | 5 | ja, brennt heftig weiter, muss gelöscht werden |

In einer zweiten Versuchsreihe wurden weitere Lacke wie oben beschrieben hergestellt und untersucht, jedoch mit folgenden Rohstoffen:

**Tabelle 6:**

| | | (jeweils Gew.%) | **G** | **H** | **I** | **J** |
|---|---|---|---|---|---|---|
| | | | Vergleich | Vergleich | Vergleich | Erfindung |
| 1 | | Demin. Wasser: | 12,2 | 12,2 | 12,2 | 12,2 |
| 2 | | Disperbyk 181 | 0,3 | 0,3 | 0,3 | 0,3 |
| 3 | | Byk 154 | 0,5 | 0,5 | 0,5 | 0,5 |
| 4 | | AMP 90 | 0,2 | 0,2 | 0,2 | 0,2 |
| 5 | | Exolit AP 435 | 25,0 | 25,0 | 25,0 | 25,0 |
| 6 | | Foamex 800 (1:1 H₂O) | 0,3 | 0,3 | 0,3 | 0,3 |
| 7 | | FoamStar^{®} SI 2292 | 0,5 | 0,5 | 0,5 | 0,5 |
| 8 | | Rheolate 278 | 1,0 | 1,0 | 1,0 | 1,0 |
| | *15min. dispergieren (Zahnscheibe)* | | 40,0 | 40,0 | 40,0 | 40,0 |
| 9 | | Styrol-Acrylat-Dispersion (FK= 50) | 45,0 | | | |
| 10 | | Standard PUD (FK= 38) | | 60,0 | | |
| 11 | | Bindemittel II (FK= 37,5) | | | 60,0 | |
| 12 | | Bindemittel I (FK= 38,2) | | | | 60,0 |
| | | demin. Wasser | 15,0 | | | |
| | *15min. dispergieren* (*Zahnscheibe*) | | 100,0 | 100,0 | 100,0 | 100,0 |
| | | | | | | |
| pH-Wert | | | 8,1 | 7,6 | 9,0 | 8,5 |
| Viskosität DIN 4mm [s] | | | tropft | tropft | 69" | 39" |
| | | | | | | |
| Standard PUD= aliphatische, anionisch stabilisierte PU-Dispersion auf Basis eines Polyesters ohne Flammschutz | | | | | | |

Viskosität:
Die Lacke G und H waren sehr hochviskos, der Lack I war mittelviskos und der Lack J hatte die gewünschte Verarbeitungsviskosität.

### Optische Prüfungen

Applikation: 400µm Aufzug auf Glas
Trocknung: 30min. Raumtemperatur; 60min. 40°C; 30min. Raumtemperatur

**Tabelle 7:**

| | **G** | **H** | **I** | **J** |
|---|---|---|---|---|
| Optik | Matt | Stark Matt | Leicht trüb | Klar |
| Transparenz trocken | Mittel | Schlecht | Gut | Sehr gut |
| Anfeuerung | Schlecht | Schlecht | Mittel | Gut |
| | | | | |
| Glanz DIN EN ISO 2813 | | | | |
| 20° Winkel | 1 | 1 | 4 | 12 |
| 60° Winkel | 4 | 1 | 26 | 48 |
| 85° Winkel | 2 | 1 | 33 | 57 |
| | | | | |

Die Transparenz der Lacke G und H war im trockenen Zustand sehr schlecht, bei Lack I war diese leicht verbessert und der Lack J hatte eine optimale Transparenz auf Holz.

Lack J besaß im Gegensatz zu Lack I und den Lacken G und H eine optimale "Anfeuerung", was zu einem schöneren Farbbild der Holzoberfläche führte.

Obwohl in allen Fällen ein vergleichbares Verhältnis von Pigment zu Bindemittelfestkörper gewählt wurde, war der Glanz der Lacke G und H sehr niedrig, der des Lackes I höher und der des Lackes J deutlich höher.

### Flammschutz

Applikation: 400µm Aufzug auf Eiche
Trocknung: 30min. bei Raumtemperatur; 60min. bei 40°C; 30min bei Raumtemperatur

**Tabelle 8:**

| **Lack** | **G** | **H** | **I** | **J** |
|---|---|---|---|---|
| Flammschutz-Index | 1 | 1 | 1 | 1 |
| Schaumbildung 15" Flamme | Keine | Leichte | Leichte | Leichte |

Alle Dispersionen zeigten bei dieser Formulierung mit externem Brandschutzmittel eine gute Flammschutzwirkung.

Der Vorteil der erfindungsgemäßen Lacke liegt also in der niedrigen Viskosität, dem geringen Eindicken, der deutlich besseren Transparenz und Anfeuerung sowie dem höheren Glanz bei gleichzeitig guter Flammschutzwirkung.

## Patentansprüche

1. Verfahren zur Herstellung einer wässrigen PU-Dispersion umfassend die Umsetzung von
- von zumindest jeweils einem Alkohol aus der Gruppe enthaltend zumindest Alkohol A, Alkohol B, und Alkohol C,
- mit zumindest einem Polyisocyanat aufweisend zumindest zwei Isocyanatgruppen,
mit einem NCO/OH -Verhältnis von größer 1,1 : 1 bis 2,5 : 1 in Bezug auf das Polyisocyanat einerseits und die Summe der Alkohole A, Alkohole B und Alkohole C andererseits,
zur Herstellung eines PU-Polymers,
- wobei der Alkohol A mindestens zwei Hydroxylgruppen und ein mittleres Molekulargewicht von 400 bis 5000 g/mol (Zahlenmittel) aufweist,
- wobei der Alkohol B mindestens zwei Hydroxylgruppen und in der Seitenkette eine Polyalkylenoxid-Gruppe enthaltend Ethylenoxid und ein mittleres Molgewicht von 400 bis 6000 g/mol (Zahlenmittel) aufweist,
- wobei der Alkohol C mindestens zwei Hydroxylgruppen und mindestens eine Phosphor-Gruppe kovalent gebunden aufweist und die Phosphor-Gruppe ausgewählt ist aus:
a) zumindest einer Phosphonat-Gruppe der Struktur
(O=)(-O-)(-O-)P- ,
b) zumindest einer Phosphinat-Gruppe der Struktur
(O=)(-O-)P< ,
und
c) Mischungen der obigen Phosphinat-Gruppe(n) a) und Phosphonat-Gruppe(n) b)
und
- das PU-Polymer in Wasser dispergiert wird.

2. Verfahren nach Anspruch 1, wobei der Alkohol A ein Polyetherpolyol, Polyesterpolyol, Polycarbonatdiol, Polyacrylatpolyol, Polyhydroxylolefin, Polycaprolactondiol oder eine Mischung davon ist;
und/oder
wobei der Alkohol A eine mittlere OH-Funktionalität von 1,9 bis 4, vorzugsweise 1,9 bis 2,3 aufweist.

3. Verfahren nach einem der vorhergehenden Ansprüche, wobei der Alkohol B mehrere Ethylenoxidgruppen in der Seitenkette aufweist, vorzugsweise im Mittel 5 bis 70, besonders bevorzugt im Mittel 7 bis 55 Ethylenoxideinheiten pro Molekül.

4. Verfahren nach einem der vorhergehenden Ansprüche, wobei der Alkohol C ausgewählt ist aus folgenden Verbindungen: 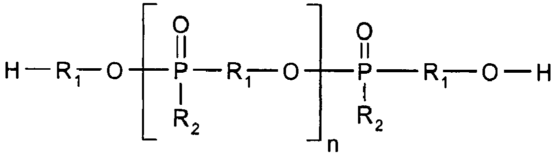 worin n eine mittlere Kettenlänge von 0 bis 20, insbesondere 2 bis 14, R₁ ein Rest der allgemeinen Formel (II), für jedes R₁ ggf. unterschiedlich 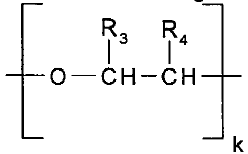 ist, worin k eine mittlere Kettenlänge von 1-5 bedeutet, vorzugsweise 1 oder 2,
R₂ ist gleich CH₃, CH₂CH₃, CH₂CH₂CH₃, CH₂(CH₃)₂, CH₂(CH₂)₂CH₃, CH₂CH(CH₃)₂, C(CH₃)₃, C₆H₅ oder CH₂-C₆H₅; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ oder O-CH₂-C₆H₅, bevorzugt CH₃, CH₂CH₃, CH₂CH₂CH₃, CH₂(CH₃)₂;
R₃, R₄, sind gleich oder verschieden und stehen unabhängig voneinander für H, CH₃, CH₂CH₃, CH₂CH₂CH₃, CH(CH₃)₂, CH₂(CH₂)₂CH₃, CH₂CH(CH₃)₂, C(CH₃)₃, C₆H₅ und/oder CH₂-C₆H₅ bedeuten, vorzugsweise H oder H und CH₃;
k ist eine mittlere Kettenlänge von 1-3, vorzugsweise 1.

5. Verfahren nach einem der vorhergehenden Ansprüche, wobei das PU-Polymer die Phosphonat- und/oder die Phosphinat-Gruppe in der Seitenkette aufweist und, das Phosphoratom vorzugsweise über eine CH₂-Gruppe an die Hydroxyl-Gruppen aufweisende Hauptketten-Fragment des Alkohols C gebunden ist, und Alkohol C insbesondere ausgewählt ist aus:
- Diethyl [bis(2-hydroxyethyl)amino]methylphosphonat;
- 9,10-Dihydro-9-oxa-10-oxid-10-[2,3-di-(2-hydroxyethoxy)carbonylpropyl]-10-phosphaphenanthren-10-oxid; und/oder
- 9,10-Dihydro-9-oxa-10-oxid-10-[1-propan-2,3-oxid]-10-phosphaphenanthren-10-oxid.

6. Verfahren nach einem der vorhergehenden Ansprüche, wobei die Alkohole C gemäß Anspruch 4 und 5 gemeinsam eingesetzt werden.

7. Verfahren nach einem der vorhergehenden Ansprüche, bei dem weiterhin ein Alkohol D eingesetzt wird, wobei das NCO/OH -Verhältnis von größer 1,1 : 1 bis 2,5 : 1 relativ zu dem Polyisocyanat einerseits und der Summe der Alkohole A, Alkohole B, Alkohole C und Alkohole D andererseits beträgt, und der Alkohol D ein hydroxylfunktionelles Acrylatmonomer mit 3 bis 8 Kohlenstoffatomen ist und vorzugsweise nur eine Hydroxylgruppe aufweist.

8. Verfahren nach einem der vorhergehenden Ansprüche, wobei
a) das PU-Polymer im Mittel wie folgt aufgebaut ist, dass
• 15 bis 30 % der C-Atome von Alkohol A gebildet werden, insbesondere 18 bis 25 %;
• 30 bis 70 % der C-Atome von Alkohol B gebildet werden, insbesondere 40 bis 60 %;
• 5 bis 40 % der C-Atome von Alkohol C gebildet werden, insbesondere 10 bis 30 %;
• und ggf.
• 0 bis 5 % der C-Atome von Alkohol D gebildet werden, insbesondere 0,1 bis 3 %; und/oder wobei
b) jeweils auch unabhängig voneinander
- der Alkohol A und der Alkohol B in einem Gewichtsverhältnis von 5 : 1 bis 1 : 5, vorzugsweise 3 : 1 bis 1 : 3 ;
- der Alkohol A und der Alkohol C in einem Gewichtsverhältnis von 10 : 1 bis 1 : 1, vorzugsweise 5 : 1 bis 1 : 1;
- der Alkohol B und der Alkohol C in einem Gewichtsverhältnis von 10 : 1 bis 3 : 1, vorzugsweise 5 : 1 bis 3 : 1;
eingesetzt werden, wobei der Alkohol D, wenn eingesetzt, insbesondere zu maximal 5 Gew.% bezogen auf die Gesamtmenge des PU-Polymers eingesetzt wird.

9. Verfahren nach einem der vorhergehenden Ansprüche, wobei die Polyisocyanate
- ein Diisocyanat eines aliphatischen Kohlenwasserstoffs mit 4 bis 15 Kohlenstoffatomen und/oder
- ein Diisocyanat eines cycloaliphatischen Kohlenwasserstoffs mit 6 bis 15 Kohlenstoffen und/oder
- ein Diisocyanat eines aromatischen Kohlenwasserstoffs mit 6 bis 15 Kohlenstoffatomen
sind.

10. Verfahren nach einem der vorhergehenden Ansprüche, wobei die Umsetzung bzw. die Umsetzungen mit den Alkoholen A, B, C und ggf. D bei 30 bis 140 °C durchgeführt wird, vorzugsweise bei 50 bis 90 °C;
und/oder
wobei das PU-Polymer eine Säurezahl von kleiner 10, vorzugsweise kleiner 5 nach DIN EN ISO 2114 aufweist.

11. Verfahren nach einem der vorhergehenden Ansprüche, wobei vor oder nach dem Dispergieren das PU-Polymer mit einem Kettenverlängerungsagenz umgesetzt wird, und das Kettenverlängerungsagenz ein Molekulargewicht von kleiner 400 g/mol aufweist, insbesondere kleiner 200 g/mol, und weiter bevorzugt ein
Diamin, Diethylentriamin und höhere Homologe bis zu maximal 12 Kohlenstoffatomen, ein Diol, und ein Aminoalkohol oder deren Mischungen ist.

12. Verfahren nach einem der vorhergehenden Ansprüche, wobei, wenn weiterhin Alkohol D eingesetzt wird, bei der Umsetzung der Alkohole A, B, C und D mit dem Polyisocyanat weiterhin Acrylat-Monomere zugegen sind, wobei die Acrylat-Monomere nach dem Dispergieren des PU-Polymers, ggf. kettenverlängert gemäß Anspruch 11, in Wasser mit der Doppelbindung des eingebauten Alkohols D in Gegenwart eines Initiators oder bei Abwesenheit von Alkohol D durch radikalische Spaltung von Kohlenstoff-Wasserstoff-Bindungen in den Acrylatmonomeren (ebenfalls in Gegenwart eines Initiators) umgesetzt werden, vorzugsweise bei einer Temperatur von größer 30°C.

13. Verfahren nach einem der vorhergehenden Ansprüche, wobei die Dispersion unabhängig voneinander durch eines oder mehrere der folgenden Merkmale gekennzeichnet ist:
a) die Dispersion weist Polyurethanteilchen eines mittleren Durchmessers von 10 bis 1000 nm, besonders bevorzugt 30 bis 500 nm auf; wobei die Partikelgrößenverteilung monomodal als auch bimodal sein kann;
b) die Dispersion weist einen Feststoffgehalt von 25 bis 55 Gew.%, bestimmt nach DIN EN ISO 3251 auf;
c) die Dispersion weist eine Viskosität bei 20°C von 10 bis 800 mPas nach DIN ISO 2884-1 und/oder
d) die Dispersion weist einen pH-Wert bei 20°C von 6,0 bis 9,5, insbesondere von 6,5 bis 9,0 nach DIN ISO-976 auf.

14. Wässrige PU-Dispersion erhältlich nach einem Verfahren gemäß einem der Ansprüche 1 bis 13.

15. Verwendung der Polyurethandispersion gemäß Anspruch 14 als flammgehemmtes wässriges 1- oder 2-Komponenten-Beschichtungsmittel zur Beschichtung von Holz, Holzwerkstoffen, mineralischen Baustoffen, Metallen, Textilien, Leder, Kunststoffen und/oder Papier, insbesondere als Klarlack.

16. Lackformulierung enthaltend neben der Polyurethandispersion als Bindemittel nach Anspruch 14, weiterhin externe Flammschutzmittel, insbesondere Ammoniumpolyphosphat, insbesondere 1 bis 40 Gew.% Ammoniumpolyphosphat.

## Claims

1. A method for producing an aqueous PU dispersion comprising the conversion of
- of at least one respective alcohol from the group containing at least alcohol A, alcohol B, and alcohol C,
- comprising at least one polyisocyanate having at least two isocyanate groups, comprising an NCO/OH ratio of greater than 1.1 : 1 to 2.5 : 1, with regard to the polyisocyanate on the one hand and the sum of the alcohols A, alcohols B, and alcohols C on the other hand,
to produce a PU polymer,
- wherein the alcohol A has at least two hydroxyl groups and an average molecular weight from 400 to 5000 g/mol (number average),
- wherein the alcohol B has at least two hydroxyl groups and a polyalkylene oxide group containing ethylene oxide in the side chain and an average molecular weight from 400 to 6000 g/mol (number average),
- wherein the alcohol C contains at least two hydroxyl groups and at least one phosphorous group, covalently bound, and the phosphorous group is selected from:
a) at least one phosphonate group with the structure
(O=)(-O-)(-O-)P-,
b) at least one phosphinate group with the structure
(O=)(-O-)P<,
and
c) mixtures of the above phosphinate group(s) a) and phosphonate group(s) b) and
- the PU polymer is dispersed in water.

2. The method according to claim 1, wherein the alcohol A is a polyether polyol, polyester polyol, polycarbonate diol, polyacrylate polyol, polyhydroxyl olefin, polycaprolactone diol, or a mixture thereof;
and/or
wherein the alcohol A has an average OH functionality from 1.9 to 4, preferably 1.9 to 2.3.

3. The method according to any one of the preceding claims, wherein the alcohol B has several ethylene oxide groups in the side chain, preferably on average 5 to 70, particularly preferably on average 7 to 55 ethylene oxide units per molecule.

4. The method according to any one of the preceding claims, wherein the alcohol C is selected from the following compounds: 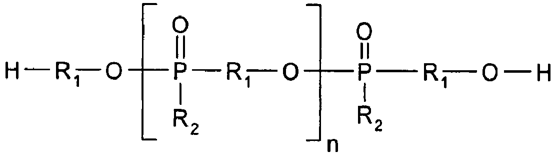 wherein n is an average chain length of 0 to 20, in particular 2 to 14,
R₁ is a radical of the general formula (II), optionally different for each R₁, 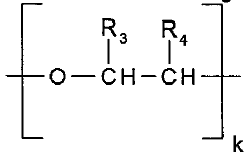 wherein k represents an average chain length of 1-5, preferably 1 or 2,
R₂ is equal CH₃, CH₂CH₃, CH₂CH₂CH₃, CH₂(CH₃)₂, CH₂(CH₂)₂CH₃, CH₂CH(CH₃)₂, C(CH₃)₃, C₆H₅ or CH₂-C₆H₅; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ or O-CH₂-C₆H₅, preferably CH₃, CH₂CH₃, CH₂CH₂CH₃, CH₂(CH₃)₂;
R₃, R₄, are equal or different and independently of one another represent H, CH₃, CH₂CH₃, CH₂CH₂CH₃, CH(CH₃)₂, CH₂(CH₂)₂CH₃, CH₂CH(CH₃)₂, C(CH₃)₃, C₆H₅ and/or CH₂-C₆H₅, preferably H or H and CH₃;
k is an average chain length of 1-3, preferably 1.

5. The method according to any one of the preceding claims, wherein the PU polymer has the phosphonate and/or the phosphinate group in the side chain, and the phosphorous atom is preferably bound via a CH₂ group to the main chain fragment of the alcohol C, which has hydroxyl groups, and alcohol C is in particular selected from:
- diethyl [bis(2-hydroxyethyl)amino]methyl phosphonate;
- 9,10-dihydro-9-oxa-10-oxide-10-[2,3-di-(2-hydroxyethoxy)carbonylpropyl]-10-phosphaphenanthrene-10-oxide; and/or
- 9,10-dihydro-9-oxa-10-oxide-10-[1-propane-2,3-oxide]-10-phosphaphenanthrene-10-oxide.

6. The method according to any one of the preceding claims, wherein the alcohols C are used together according to claim 4 and 5.

7. The method according to any one of the preceding claims, in the case of which an alcohol D is furthermore used, wherein the NCO/OH ratio is from greater than 1.1:1 to 2.5 : 1 relative to the polyisocyanate on the one hand and the sum of the alcohols A, alcohols B, alcohols C, and alcohols D on the other hand, and the alcohol D is a hydroxyl-functional acrylate monomer with 3 to 8 carbon atoms and preferably only has one hydroxyl group.

8. The method according to any one of the preceding claims, wherein
a) the PU polymer is constructed as follows on average that
• 15 to 30% of the C atoms are formed by alcohol A, in particular 18 to 25%;
• 30 to 70% of the C atoms are formed by alcohol B, in particular 40 to 60%;
• 5 to 40% of the C atoms are formed by alcohol C, in particular 10 to 30 %;
• and optionally
• 0 to 5% of the C atoms are formed by alcohol D, in particular 0.1 to 3%;
and/or wherein
b) in each case also independently of one another
- the alcohol A and the alcohol B are used in a weight ratio from 5 : 1 to 1 : 5, preferably 3 : 1 to 1 : 3 ;
- the alcohol A and the alcohol C in a weight ratio from 10 : 1 to 1 : 1, preferably 5 : 1 to 1 : 1;
- the alcohol B and the alcohol C in a weight ratio from 10 : 1 to 3 : 1, preferably 5 : 1 to 3 : 1,
wherein the alcohol D, when used, is used in particular with maximally 5% by weight, based on the total quantity of the PU polymer.

9. The method according to any one of the preceding claims, wherein the polyisocyanates are
- a diisocyanate of an aliphatic hydrocarbon with 4 to 15 carbon atoms and/or
- a diisocyanate of a cycloaliphatic hydrocarbon with 6 to 15 carbon atoms and/or
- a diisocyanate of an aromatic hydrocarbon with 6 to 15 carbon atoms.

10. The method according to any one of the preceding claims, wherein the conversion or the conversion, respectively, is performed by means of the alcohols A, B, C, and optionally D at 30 to 140°C, preferably at 50 to 90°C;
and/or
wherein the PU polymer has an acid value of less than 10, preferably less than 5 according to DIN EN ISO 2114.

11. The method according to any one of the preceding claims, wherein before or after the dispersion, the PU polymer is converted by means of a chain extending reagent, and the chain extending reagent has a molecular weight of less than 400 g/mol, in particular less than 200 g/mol, and more preferably is a diamine, diethylene triamine, and higher homologs of up to maximally 12 carbon atoms, a diol, and an amino alcohol, or the mixtures thereof.

12. The method according to any one of the preceding claims, wherein, when alcohol D is furthermore used, acrylate monomers are furthermore added during the conversion of the alcohols A, B, C, and D by means of the polyisocyanate, wherein the acrylate monomers are converted after the dispersion of the PU polymer, optionally chain-extended according to claim 11, in water with the double bond of the incorporated alcohol D in the presence of an initiator or in the absence of alcohol D by means of radical cleavage of carbon-hydrogen bonds in the acrylate monomers (likewise in the presence of an inhibitor), preferably at a temperature of greater than 30°C.

13. The method according to any one of the preceding claims, wherein the dispersion is characterized independently of one another by one or several of the following features:
a) the dispersion has polyurethane particles of an average diameter from 10 to 1000 nm, particularly preferably 30 to 500 nm auf; wherein the particle size distribution can be monomodal as well as bimodal;
b) the dispersion has a solids content from 25 to 55% by weight, determined according to DIN EN ISO 3251;
c) the dispersion has a viscosity at 20°C from 10 to 800 mPas according to DIN ISO 2884-1 and/or
d) the dispersion has a pH value at 20°C from 6.0 to 9.5, in particular from 6.5 to 9.0 according to DIN ISO-976.

14. An aqueous PU dispersion that can be obtained according to a method according to any one of claims 1 to 13.

15. Use of the polyurethane dispersion according to claim 14 as flame-retarded aqueous 1- or 2-component coating agent for coating wood, wood materials, mineral building materials, metals, textiles, leather, plastics and/or paper, in particular as clear varnish.

16. A varnish formulation furthermore containing, in addition to the polyurethane dispersion as binding agent according to claim 14, external flame retardants, in particular ammonium polyphosphate, in particular 1 to 40% by weight of ammonium polyphosphate.

## Revendications

1. Procédé de fabrication d'une dispersion aqueuse de PU, comportant la réaction :
- d'au moins à chaque fois un alcool du groupe contenant au moins un alcool A, un alcool B et un alcool C
- avec au moins un polyisocyanate présentant au moins deux groupes isocyanate,
avec un rapport NCO/OH de plus de 1,1 : 1 à 2,5 : 1 par rapport au polyisocyanate d'une part et à la somme des alcools A, des alcools B et des alcools C d'autre part, pour la fabrication d'un polymère PU,
- l'alcool A présentant au moins deux groupes hydroxyle et une masse moléculaire moyenne de 400 à 5000 g/mol (moyenne en nombre) ;
- l'alcool B présentant au moins deux groupes hydroxyle et, dans la chaîne latérale, un groupe poly(oxyde d'alkylène) contenant de l'oxyde d'éthylène, et une masse moléculaire moyenne de 400 à 6000 g/mol (moyenne en nombre) ;
- l'alcool C présentant, liés de manière covalente, au moins deux groupes hydroxyle et au moins un groupe phosphore et le groupe phosphore étant choisi parmi :
a) au moins un groupe phosphonate de la structure :
(O=)(-O-)(-O-)P- ,
b) au moins un groupe phosphinate de la structure :
(O=)(-O-)P< ,
et
c) des mélanges du ou des groupes phosphinate a) et du ou des groupes phosphonate b) ci-dessus,
et
- le polymère PU est dispersé dans l'eau.

2. Procédé selon la revendication 1, dans lequel l'alcool A est un polyétherpolyol, un polyesterpolyol, un polycarbonatediol, un polyacrylatepolyol, une polyhydroxyloléfine, un polycaprolactonediol ou un mélange de ceux-ci ;
et/ou
dans lequel l'alcool A présente une fonctionnalité OH moyenne de 1,9 à 4, de préférence de 1,9 à 2,3.

3. Procédé selon l'une des revendications précédentes, dans lequel l'alcool B présente plusieurs groupes oxyde d'éthylène dans la chaîne latérale, de préférence en moyenne de 5 à 70, de manière particulièrement préférée en moyenne de 7 à 55 unités oxyde d'éthylène par molécule.

4. Procédé selon l'une des revendications précédentes, dans lequel l'alcool C est choisi parmi les composés suivants : 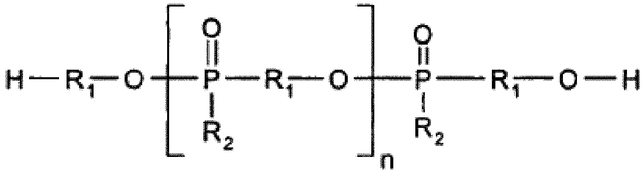 où :
- n est une longueur de chaîne moyenne de 0 à 20, en particulier de 2 à 14,
- R₁ est un reste de la formule générale (II), le cas échéant différent pour chaque R₁, 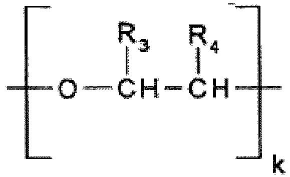
où
- k signifie une longueur moyenne de chaîne de 1 à 5, de préférence 1 ou 2, où :
- R₂ est égal à CH₃, CH₂CH₃, CH₂CH₂CH₃, CH₂(CH₃)₂, CH₂(CH₂)₂CH₃, CH₂CH(CH₃)₂, C(CH₃)₃, C₆H₅ ou CH₂-C₆H₅ ; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ ou O-CH₂-C₆H₅,
de préférence CH₃, CH₂CH₃, CH₂CH₂CH₃, CH₂(CH₃)₂ ;
- R₃, R₄ sont identiques ou différents et représentent indépendamment l'un de l'autre H, CH₃, CH₂CH₃, CH₂CH₂CH₃, CH(CH₃)₂, CH₂(CH₂)₂CH₃, CH₂CH(CH₃)₂, C(CH₃)₃, C₆Hₛ et/ou CH₂-C₆Hₛ, de préférence H ou H et CH₃ ;
- k est une longueur de chaîne moyenne de 1 à 3, de préférence 1.

5. Procédé selon l'une des revendications précédentes, dans lequel le polymère PU présente le groupe phosphonate et/ou le groupe phosphinate dans la chaîne latérale, et l'atome de phosphore est, de préférence, lié par l'intermédiaire d'un groupe CH₂ au fragment de chaîne principale de l'alcool C présentant des groupes hydroxyle, et l'alcool C est en particulier choisi parmi :
- le [bis(2-hydroxyéthyl)amino]méthylphosphonate de diéthyle ;
- le 9,10-dihydro-9-oxa-10-oxyde-10-[2,3-di-(2-hydroxyéthoxy)carbonylpropyl]-10-phosphaphénanthrène-10-oxyde ; et/ou
- le 9,10-dihydro-9-oxa-10-oxyde-10-[1-propan-2,3-oxyde]-10-phosphaphénanthrène-10-oxyde.

6. Procédé selon l'une des revendications précédentes, dans lequel les alcools C selon les revendications 4 et 5 conjointement sont utilisés.

7. Procédé selon l'une des revendications précédentes, dans lequel on utilise en outre un alcool D, le rapport NCO/OH étant de plus de 1,1 : 1 à 2,5 : 1 par rapport au polyisocyanate d'une part et à la somme des alcools A, des alcools B, des alcools C et des alcools D d'autre part, et l'alcool D est un monomère acrylate à fonctionnalité hydroxyle ayant de 3 à 8 atomes de carbone et présente de préférence seulement un groupe hydroxyle.

8. Procédé selon l'une des revendications précédentes, dans lequel :
a) le polymère PU est construit en moyenne de la manière suivante :
• 15 à 30 % des atomes de C sont formés par l'alcool A, en particulier 18 à 25 % ;
• 30 à 70 % des atomes de C sont formés par l'alcool B, en particulier 40 à 60 % ;
• 5 à 40 % des atomes de C sont formés par l'alcool C, en particulier 10 à 30 % ;
• et, le cas échéant
• 0 à 5 % des atomes de C sont formés par l'alcool D, en particulier 0,1 à 3 % ;
et/ou dans lequel
b) à chaque fois également indépendamment l'un de l'autre :
- l'alcool A et l'alcool B sont utilisés dans un rapport en poids de 5 : 1 à 1 : 5, de préférence de 3 : 1 à 1 : 3 ;
- l'alcool A et l'alcool C sont utilisés dans un rapport en poids de 10 : 1 à 1 : 1, de préférence de 5:1 à 1:1 ;
- l'alcool B et l'alcool C sont utilisés dans un rapport en poids de 10 : 1 à 3 : 1, de préférence de 5 : 1 à 3 : 1 ;
l'alcool D, lorsqu'il est utilisé, étant utilisé en particulier à raison de 5 % en poids au maximum par rapport à la quantité totale du polymère PU.

9. Procédé selon l'une des revendications précédentes, dans lequel les polyisocyanates sont
- un diisocyanate d'un hydrocarbure aliphatique ayant de 4 à 15 atomes de carbone et/ou
- un diisocyanate d'un hydrocarbure cycloaliphatique ayant de 6 à 15 atomes de carbone et/ou
- un diisocyanate d'un hydrocarbure aromatique ayant de 6 à 15 atomes de carbone.

10. Procédé selon l'une des revendications précédentes, dans lequel la ou les réactions avec les alcools A, B, C et, le cas échéant, D est ou sont effectuée(s) à une température de 30 à 140°C, de préférence de 50 à 90°C ;
et/ou
dans lequel le polymère PU présente un indice d'acide de moins de 10, de préférence de moins de 5 selon DIN EN ISO 2114.

11. Procédé selon l'une des revendications précédentes, dans lequel, avant ou après la dispersion, le polymère PU est mis à réagir avec un agent d'allongement de chaîne, et l'agent d'allongement de chaîne présente une masse moléculaire de moins de 400 g/mol, en particulier de moins de 200 g/mol, et de façon davantage préférée est une diamine, une diéthylènetriamine et les homologues supérieurs jusqu'à 12 atomes de carbone au maximum, un diol, et un aminoalcool ou leurs mélanges.

12. Procédé selon l'une des revendications précédentes, dans lequel, lorsqu'un alcool D est en outre utilisé, des monomères acrylates sont en outre ajoutés lors de la réaction des alcools A, B, C et D avec le polyisocyanate, les monomères acrylates, après la dispersion dans l'eau du polymère PU, le cas échéant à chaîne allongée selon la revendication 11, réagissant avec la double liaison de l'alcool D incorporé en présence d'un initiateur ou, en l'absence d'alcool D, par clivage radicalaire de liaisons carbone-hydrogène dans les monomères acrylates (également en présence d'un initiateur), de préférence à une température de plus de 30°C.

13. Procédé selon l'une des revendications précédentes, dans lequel la dispersion est **caractérisée par** une ou plusieurs des caractéristiques suivantes, indépendamment les unes des autres :
a) la dispersion présente des particules de polyuréthane d'un diamètre moyen de 10 à 1000 nm, de préférence de 30 à 500 nm, la distribution de la taille des particules pouvant être monomodale de même que bimodale ;
b) la dispersion présente une teneur en matières solides de 25 à 55 % en poids, déterminée selon DIN EN ISO 3251 ;
c) la dispersion présente une viscosité à 20°C de 10 à 800 mPas selon DIN ISO 2884-1, et/ou
d) la dispersion présente une valeur de pH à 20°C de 6,0 à 9,5, en particulier de 6,5 à 9,0 selon DIN ISO-976.

14. Dispersion aqueuse de PU pouvant être obtenue par un procédé selon l'une des revendications 1 à 13.

15. Utilisation de la dispersion de polyuréthane selon la revendication 14 en tant que produit de revêtement aqueux ignifugé à 1 ou 2 composants pour le revêtement du bois, des matériaux en bois, des matériaux de construction minéraux, des métaux, des textiles, du cuir, des matières plastiques et/ou du papier, notamment comme vernis transparent.

16. Formulation de peinture contenant, en plus de la dispersion de polyuréthane en tant que liant selon la revendication 14, en outre des agents externes de protection conre les flammes, en particulier du polyphosphate d'ammonium, en particulier de 1 à 40 % en poids de polyphosphate d'ammonium.
